# EUROPÄISCHE PATENTANMELDUNG

(11) **EP 0 758 738 A2**
(43) Veröffentlichungstag der Anmeldung: **19.02.1997**
(21) Anmeldenummer: 96108684.0
(22) Anmeldetag: 30.05.1996
(51) Int. Cl.: G01C 21/20, B60R 25/10

(54) **Kraftfahrzeug mit einer satellitengestützten Navigationseinrichtung zur Positionsbestimmung und mit einer Anti-Diebstahl-Einrichtung**

(30) Priorität: 12.08.1995 DE 19529742
(71) Anmelder: Bayerische Motoren Werke Aktiengesellschaft, 80788 München (DE)
(72) Erfinder: Nehls, Wolfgang, 85716 Unterschleissheim (DE)

(57) **Zusammenfassung**

Bei einem Kraftfahrzeug mit einer satellitengestützten Navigationseinrichtung zur Positionsbestimmung und mit einer Anti-Diebstahl-Einrichtung (ADE) ist die Position des Kraftfahrzeugs nach dem Abstellen des Kraftfahrzeugs nicht-flüchtig speicherbar. Zu einem späteren Zeitpunkt ist diese Position mit der aktuellen Position des Kraftfahrzeugs vergleichbar. Bei einer Abweichung der beiden Positionen spricht die ADE an.

## Beschreibung

Die Erfindung bezieht sich auf ein Kraftfahrzeug mit den Merkmalen des Oberbegriffs des Patentanspruchs 1.

Es ist bekannt, in einem Kraftfahrzeug sowohl eine satellitengestützte Navigationseinrichtung als auch eine Anti-Diebstahl-Einrichtung (ADE) vorzusehen. Dabei ist es auch bekannt, bei Ansprechen der ADE ein Funksignal auszusenden, das einen Rückschluß auf die aktuelle Position des Kraftfahrzeugs zuläßt. Auf diese Weise soll es möglich sein, das Kraftfahrzeug wieder aufzufinden. Die Navigationseinrichtung hat somit im Rahmen der ADE lediglich die bestimmungsgemäße Funktion, eine Aussage über die aktuelle Position des Kraftfahrzeugs zu liefern. Voraussetzung für das Erkennen eines Diebstahls ist das Ansprechen der ADE. Bei einer relativ häufigen Form von Diebstählen ist dies nicht gewährleistet. Es handelt sich dabei um den Fall der unberechtigt durchgeführten Verlagerung, beispielsweise durch Abschleppen oder Verbringen des Kraftfahrzeugs nach vorhergehendem Aufladen.

Der Erfindung liegt die Aufgabe zugrunde, ein Kraftfahrzeug der eingangs genannten Art zu schaffen, bei dem auch bei der angesprochenen besonderen Form von Diebstahl die ADE anspricht.

Die Erfindung löst diese Aufgabe durch die kennzeichnenden Merkmale des Patentanspruchs 1.

Die Navigationseinrichtung dient nunmehr zusätzlich zu ihrem bestimmungsgemäßen Gebrauch dazu, Vergleichsdaten für die ADE zu liefern. Stimmen diese Daten nicht überein, so ergibt sich daraus zwangsläufig, daß das Kraftfahrzeug von dem Ort, den es bei Abstellen des Kraftfahrzeugs inne hatte, verbracht wurde. Mit Hilfe der Navigationseinrichtung ist die Position des Kraftfahrzeugs mit hinreichender Genauigkeit bestimmbar. Bereits eine Änderung des Standorts um wenige Meter ergeben einen Unterschied in den Positionsdaten, die auf einfache Weise mit der ADE festgestellt werden können und es der ADE erlauben, die bei einem Diebstahl vorgesehenen Maßnahmen zu ergreifen. Hierzu gehören akustische oder optische Warnmeldungen, die durch das Kraftfahrzeug ausgelöst werden und für den Außenstehenden unmittelbar erkennbar sind. Es kann auch ein stiller Alarm durch Absetzen eines Funksignals oder einer Telefonmeldung ausgelöst werden. Ebenso ist es möglich, eine ADE, die mit einer elektronischen Wegfahrsperre zusammenarbeitet bzw. mit dieser identisch ist, zum Aufrechterhalten der elektronischen Wegfahrsperre zu veranlassen.

Im Rahmen der Erfindung sind vielfältige Anwendungsmöglichkeiten gegeben. Zum einen geht es um die Möglichkeit, eventuelle Positionsveränderungen des Kraftfahrzeugs zu bestimmen. Hierzu ist es möglich, die aktuelle Position in zeitlicher Folge mehrmals zu bestimmen. Diese zeitliche Folge kann beispielsweise mit regelmäßigem Abstand oder aber auch abhängig von äußeren oder inneren Bedingungen sein. So kann die Frequenz, mit der die aktuelle Position bestimmt wird, entsprechend der größeren Diebstahl-Wahrscheinlichkeit nachts größer sein. Eine höhere Diebstahl-Wahrscheinlichkeit ist beispielsweise auch dann gegeben, wenn es sich beim Kraftfahrzeug um ein Cabrio-Fahrzeug handelt, das offen abgestellt wird. Auch kann der Fahrzeugbenutzer selbst beispielsweise mit Hilfe eines Schalters, die Abtastfrequenz für die Positionsbestimmung erhöhen. Er wird dies beispielsweise dann tun, wenn er gezwungen ist, das Kraftfahrzeug unversperrt abzustellen und er eine höhere Diebstahl-Wahrscheinlichkeit vermutet. Selbstverständlich kann in einem derartigen Fall die Häufigkeit der Positionsbestimmung auch selbsttätig erhöht werden.

Es kann genügen oder aber auch ergänzend vorgesehen sein, die aktuelle Position bei Wieder-Inbetriebnahme des Kraftfahrzeugs zu bestimmen. Es handelt sich dabei in aller Regel um den letztmöglichen Zeitpunkt für diese Bestimmung. Diese Maßnahme für sich betrachtet zeichnet sich durch einen geringen Energieverbrauch aus.

Ein anderer Aspekt der Erfindung beschäftigt sich mit der Verbesserung der ADE selbst. Damit wird der Weg gewählt, den Gebrauchsnutzen des ggf. gestohlenen Kraftfahrzeugs für den unberechtigten Nutzer einzuschränken. Generell bestehen diese Maßnahmen darin, benutzerrelevante Funktionen auszuschalten. An erster Stelle ist dabei die hochwertige und teure Navigationseinrichtung selbst zu nennen, die bei Ansprechen der ADE ausgeschaltet wird. Neben der Komforteinbuße ergibt sich für den unberechtigten Nutzer die Gefahr erkannt zu werden, da die fehlende Funktionstüchtigkeit der Navigationseinrichtung für den unberechtigten Nutzer die Gefahr beinhaltet, auf diesen 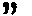 Defekt" angesprochen zu werden und sich dem Diebstahl-Verdacht auszusetzen.

Im Falle einer durch den rechtmäßigen Benutzer veranlaßten Verlagerung des Kraftfahrzeugs, beispielsweise durch einen Autoreisezug, würde zwar die Positionsabweichung bei Wiederinbetriebnahme erkannt werden. Da der Benutzer aber als berechtigt identifiziert wird, beispielsweise durch das Freischalten der elektronischen Wegfahrsperre, unterbleibt das Ansprechen der ADE.

Damit ergibt sich eine Erweiterung bekannter Anti-Diebstahl-Einrichtungen, da die Navigationseinrichtung zum Auslösen der Anti-Diebstahl-Einrichtung führt und gleichzeitig ein Indiz für einen Diebstahl liefern kann.

## Patentansprüche

1. Kraftfahrzeug mit einer satellitengestützten Navigationseinrichtung zur Positionsbestimmung und mit einer Anti-Diebstahl-Einrichtung (ADE),
dadurch gekennzeichnet, daß die Position des Kraftfahrzeugs nach dem Abstellen des Kraftfahrzeugs nicht-flüchtig speicherbar ist, daß diese Position mit der aktuellen Position des Kraftfahrzeugs zu einem späteren Zeitpunkt vergleichbar ist und daß bei einer Abweichung der beiden Positionen die ADE anspricht.

2. Kraftfahrzeug nach Anspruch 1,
dadurch gekennzeichnet, daß die aktuelle Position mehrmals in zeitlicher Folge bestimmbar ist.

3. Kraftfahrzeug nach Anspruch 1 oder 2,
dadurch gekennzeichnet, daß die aktuelle Position gleich der Position des Kraftfahrzeugs bei Wieder-Inbetriebnahme ist.

4. Kraftfahrzeug nach einem der Ansprüche 1 bis 3,
dadurch gekennzeichnet, daß bei Ansprechen der ADE die Navigationseinrichtung bleibend ausschaltbar ist.
